# EUROPÄISCHE PATENTANMELDUNG

(11) **EP 2 526 767 A1**
(43) Veröffentlichungstag der Anmeldung: **28.11.2012**
(21) Anmeldenummer: 12004012.6
(22) Anmeldetag: 23.05.2012
(51) Int. Cl.: A01M 31/02

(54) **Kanzelhochsitz mit einer auf mehreren Stützen getragenen Kanzel**

(30) Priorität: 23.05.2011 DE 102011050570
(71) Anmelder: Färber, Herbert, 72535 Heroldstatt (DE)
(72) Erfinder: Färber, Herbert, 72535 Heroldstatt (DE)
(74) Vertreter: Meyer, Thorsten

(57) **Zusammenfassung**

Die Erfindung betrifft einen Kanzelhochsitz (1) mit einer auf mehreren Stützen (31 bis 34) getragenen Kanzel (2) mit einer Dach- (21) und einer Bodenseite (22) und mehreren die Kanzel (2) zu den Seiten hin wenigstens teilweise verschließenden Seitenwänden (23 bis 26), wobei die die Kanzel (2) tragenden Stützen (31 bis 34) wenigstens zwei Seiten der Kanzel in mehreren Gruppen (3a, 3b) zugeordnet sind, wobei wenigstens eine erste Gruppe (3a) wenigstens eine Stütze (31, 32) die starr mit der Kanzel (2) verbunden ist umfasst und wenigstens eine zweite Gruppe (3b) wenigstens eine Schwenk-Stütze (33, 34) umfasst, die im Bereich des Dachs (21) der Kanzel (2) von der wenigstens einen anderen Gruppe (3a) von Stützen (31, 32) als Schwenk-Stützen (33, 34) wegschwenkbar gelagert ist/sind. Des weiteren betrifft die Erfindung ein Verfahren zur Aufstellung eines solchen Kanzelhochsitzes (1).

## Beschreibung

Die Erfindung betrifft einen Kanzelhochsitz mit einer auf mehreren Stützen getragenen Kanzel und ein Verfahren zu dessen Aufstellung.

Kanzelhochsitze werden insbesondere von Jägern und Förstern in Feld und Wald eingesetzt. Dabei müssen die Hochsitze unter möglichst geringem Aufwand sicher aufgestellt werden, so dass ein verlässlicher Stand eine ungefährliche Verwendung ermöglicht.

Bekannte Kanzelhochsitze werden dabei in Teilen aufgebaut oder als Ganzes mit von der Kanzel abragenden Stelzen mittels Seilzügen oder dergleichen von einer liegenden in eine aufrechte Position gekippt.

Ein Beispiel für einen bekannten Kanzelhochsitzes, der auf vier Stützen ruht, ist in der DE 8625039 U1 gezeigt.

Die Montage bzw. Aufstellung in der bisher bekannten Art und Weise von Kanzelhochsitzen stellt ein hohes Risiko für die beteiligten Personen dar. So wird bei herkömmlichen Hochsitzen die Bock- oder Kanzelmontage in der Höhe ausgeführt, was zu einem Absturzrisiko bei dieser zumeist ungesicherten Tätigkeit führt. So sind 28% aller Jagdunfälle insgesamt Absturzunfälle bei der Hochsitzmontage. Auch beim Aufstellen von fertigen starren Konstruktionen kommt es durch Umkippen immer wieder zu Beschädigungen oder auch Schäden an Personen. Weiterer Nachteil bei der bekannten Art und Weise von Aufbau oder Aufstellung von Hochsitzen ist, dass immer mehrere Personen zugleich vor Ort sein müssen, was die Kosten des Unterhalts der für die Jagd notwendigen Hochsitze in die Höhe treibt.

In der DE 298 24 326 U1 ist ein Kanzelhochsitz gezeigt, bei dem die Aufstellung durch Hilfe eines Fahrzeugs erfolgt, damit beim Kippen der starren Konstruktion diese nicht wieder umfällt.

Wünschenswert wäre eine einfachere Konstruktion, die unter möglichst geringem Personalaufwand ein sicheres Aufstellen ermöglicht.

Aufgabe der Erfindung ist es, einen verbesserten Kanzelhochsitz mit einer auf mehreren Stützen getragenen Kanzel zur Verfügung zu stellen, bei der die obengenannten Nachteile vermieden werden.

Diese Aufgabe wird durch einen Kanzelhochsitz nach den Merkmalen des Anspruchs 1 und ein Verfahren zur Aufstellung eines solchen Kanzelhochsitzes nach den Merkmalen des Anspruchs 13 gelöst.

Erfindungsgemäß ist ein Kanzelhochsitz mit einer auf mehreren Stützen getragenen Kanzel mit einer Dach- und einer Bodenseite und mehreren die Kanzel zu den Seiten hin wenigstens teilweise verschließenden Seitenwänden, vorgeschlagen, der sich dadurch auszeichnet, dass die die Kanzel tragenden Stützen wenigstens zwei Seiten der Kanzel in mehreren Gruppen zugeordnet sind, wobei wenigstens eine erste Gruppe wenigstens eine Stütze die starr mit der Kanzel verbunden ist umfasst und wenigstens eine zweite Gruppe wenigstens eine Schwenk-Stütze umfasst, die im Bereich des Dachs der Kanzel von der wenigstens einen anderen Gruppe von Stützen als Schwenk-Stützen wegschwenkbar gelagert ist/sind. Der Kanzelhochsitz kann von einer wenigstens teilweise auf einem im wesentlichen ebenen Boden liegenden "B" in eine selbstständig stehende Position "A" verbracht werden, wobei die Gruppe der Schwenk-Stützen von der anderen Gruppe von Stützen abgeschwenkt ist, wobei die Stützen mit ihren der Kanzel abgewandten Enden den Boden berühren und dabei die Enden aufeinander zu bewegt werden können bis der Kanzelhochsitz in eine selbstständig durch die Stützen getragenen stehenden Position "A" verbringbar ist.

Hierdurch ist kann auf besonders einfache und effektive Weise die Aufstellung ohne Aufbau in der Höhe ohne ausreichende Absicherung erfolgen. Der Kanzelhochsitz kann am Boden liegend - entweder durch Anlieferung am Stück oder durch Montage am Boden - durch Zusammenschwenken der Schwenkstützen auf die Stützen einer starr montierten Gruppe Aufgerichtet werden. Hierzu ist im besten Fall nur eine Person mit einer Seilwinde, einem Seilzugsystem oder einem an einem Fahrzeug befestigten und von diesem gezogenen Seil notwendig.

Vorteilhafterweise ist mit der/den Schwenk-Stützen eine Seitenwand verbunden und von der Kanzel mit den Schwenk-Stützen zusammen wegschwenkbar ist. Dies verbessert insbesondere wenn zwei Schwenk-Stützen mit der Seitenwand verbunden sind die Stabilität der Schwenk-Stützen zueinander beim Wegschwenken bzw. beim Aufrichten.

Eine vorteilhafte Ausgestaltung der Erfindung sieht vor, dass an den vier den Ecken einer rechteckigen oder quaderförmigen Kanzel Stützen vorgesehen sind, wobei zwei einer Seite der Kanzel zugeordnete Stützen die Schwenk-Stützen bilden. Eine rechteckige Bauform mit vier Stützen ist eine einfache und übersichtliche Variante.

Zum Schutz vor Regen und Sonne ist von Vorteil vorgesehen, dass das die Dachseite bildende Dach die Seitenwände und/oder die Längsachsen der Stützen und/oder der Schwenk-Stützen wenigstens teilweise überragt.

Um optimal Raum zum Abschwenken der Schwenk-Stützen zu geben ist nach einer vorteilhaftern Weiterbildung der Erfindung vorgesehen, dass das Dach an der der Gruppe der Schwenk-Stützen gegenüberliegenden Seite aus der Ebene der Dachseite heraus schwenkbar gelagert ist. Hierdurch ist dann die Dachkante des insbesondere überstehenden Dachs nicht mehr im Wege.

Vorteilhaferweise ist das Schwenklager der Schwenk-Stütze/n an einer Teil-Seitenwand angeordnet, wobei die Teil-Seitenwand im Bereich des Daches angeordnet ist.

Von Vorteil weist der Kanzelhochsitz an einer Seite an den Stützen eine Leiter auf.

Ein Einstieg 9 ist von Vorteil an einer Seitenwand der Kanzel vorgesehen.

Eine Vorteilhafte Variante der Erfindung sieht vor, dass die Bodenseite der Kanzel wenigstens eine Seitenwand insbesondere an der Seitenwand des Einstiegs in Form eines Balkons überragt.

Zum sicheren Stand der starren Stützen kann vorgesehen sein, dass die der Gruppe der Schwenk-Stützen gegenüberliegende Gruppe von Stützen an ihren Enden zur Lagerung am Boden in einem Stützlager vorbereitet sind.

Eine bevorzugte Weiterbildung der Erfindung sieht vor, dass eine Stütze und/oder eine Schwenk-Stütze aus einem Paar parallel angeordneter Bauelemente gebildet ist wobei die Bauelemente der Schwenk-Stützen insbesondere die Teil-Seitenfläche/n von beiden Seiten teilweise umgeben und mit einer gemeinsamen Achse im Schwenklager durch die Teil-Seitenfläche/n verbunden sind.

Das erfindungsgemäße Verfahren zur Aufstellung eines Kanzelhochsitzes nach einem der Ansprüche 1 bis 12, sieht vor, dass dieser von einer wenigstens teilweise auf einem im wesentlichen ebenen Boden liegenden "B" in eine selbstständig stehende Position "A" verbracht werden wird, wobei die Gruppe der Schwenk-Stützen von der anderen Gruppe von Stützen in eine liegende Position "B" abgeschwenkt wird, wobei die Stützen mit ihren der Kanzel abgewandten Enden den Boden berühren und dabei die Enden aufeinander zu bewegt werden bis der Kanzelhochsitz in eine selbstständig durch die Stützen getragenen stehenden Position "A" verbracht ist.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Seitenansicht eines erfindungsgemäßen Kanzelhochsitzes mit einer auf mehreren Stützen getragenen Kanzel nach erfolgter Aufstellung.
- Fig. 2: eine Detaildarstellung des am Dach des Kanzelhochsitzes vorgesehenen Gelenks für die abschwenkbaren Stützen,
- Fig. 3: den Kanzelhochsitz aus Fig. 1 in noch nicht aufgerichteter vollständig liegender Position,
- Fig. 4: den Kanzelhochsitz aus Fig. 1 in einer Zwischenphase der Aufstellung,
- Fig. 5: den Kanzelhochsitz aus Fig. 1 in einer weiter fortgeschrittenen Zwischenphase der Aufstellung,
- Fig. 6: den Hochsitz aus Fig. 1 unmittelbar vor Abschluss des Aufrichtens,
- Fig. 7: eine Detaildarstellung eines weiteren erfindungsgemäßen Kanzelhochsitzes mit einem Balkon vollständig liegender Position,
- Fig. 8: den Kanzelhochsitz aus Fig. 7 in einer Zwischenphase der Aufstellung mithilfe eines über einen Baumstamm geführten Aufrichtseils,
- Fig. 9: den Kanzelhochsitz aus Fig. 7 in einer weiter fortgeschrittenen Zwischenphase der Aufstellung, und
- Fig. 10: den Hochsitz aus Fig. 1 in Aufgerichteter Position.

Die in den Figuren gleichen Bezugsziffern bezeichnen gleiche oder gleich wirkende Elemente.

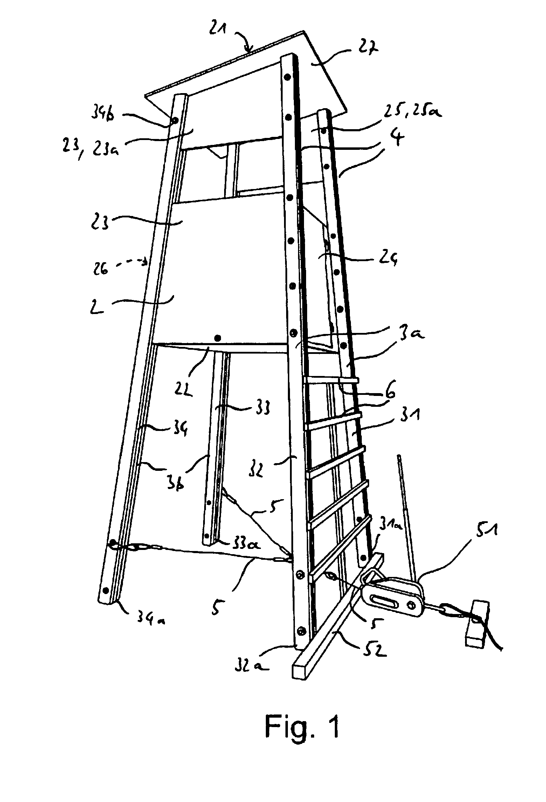

In Fig. 1 ist ein Kanzelhochsitz 1 gezeigt, der erfindungsgemäß über wegschwenkbare Schwenk-Stützen 33 und 34 verfügt. Die Kanzel 2 weist an einer Seitenwand 24 einen Einstieg 9 auf unterhalb dessen eine Leiter 6 zwischen weiteren Stützen 31 und 32 angebracht ist.

Dabei ist eine Kanzel 2 mit einer Dach- 21 und einer Bodenseite 22 und mehreren die Kanzel 2 zu den Seiten hin wenigstens teilweise verschließenden Seitenwänden 23 bis 26 im gezeigten Beispiel von vier Stützen 31 bis 34 getragen. Dabei sind die die Kanzel 2 tragenden Stützen 31 bis 34 zwei Seiten der Kanzel in Gruppen 3a, 3b zugeordnet.

Die erste Gruppe 3a umfasst die die Stützen 31 und 32 die starr mit der Kanzel 2 verbunden sind. Die zweite Gruppe 3b umfasst die beiden Schwenk-Stützen 33 und 34, die im Bereich des Dachs 21 der Kanzel 2 von der anderen Gruppe 3a von Stützen als Schwenk-Stützen 33 und 34 wegschwenkbar gelagert sind.

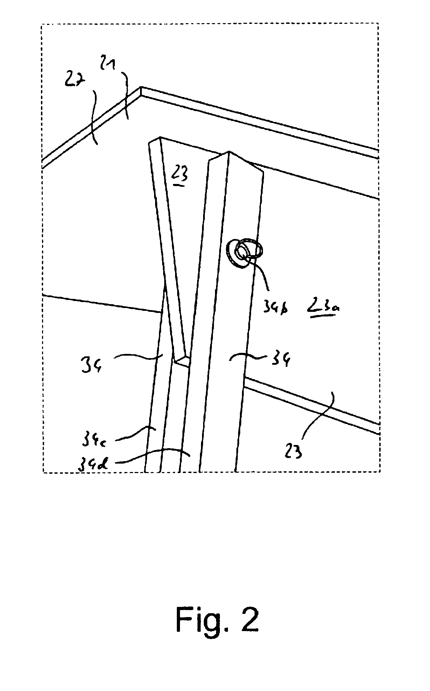

Die Schwenklager 35, 36 der Schwenk-Stützen 33, 34 sind an den oberen Teil-Seitenwänden 23a, 25a angeordnet (siehe später auch Fig. 2). Die Teil-Seitenwände schließen direkt an das Dach 27 an.

Die zwei Gruppen von Stützen 3a und 3b können somit auseinander geklappt werden, wodurch sich die Kanzel 2 bei Bodenkontakt der Enden 31a bis 34a der Stützen 31 bis 34 vom Boden erhebt oder auf diesen senkt, wenn man die Stützen zusammenschiebt oder auseinanderzieht.

Eine Seitenwand 26 ist mit den Schwenk-Stützen 33 und 34 verbunden und ist somit von der Kanzel 2 mit den Schwenk-Stützen 33 und 34 zusammen wegschwenkbar. Dies verleiht den beiden Schwenk-Stützen 33 und 34 zueinander Stabilität im abgeschwenkten Zustand.

Zum Schutz vor Regen überragt das die Dachseite 21 bildende Dach 27 die Seitenwände 23 bis 26 und die Längsachsen der Stützen 31 und 32 und der Schwenk-Stützen 33 und 34.

Im ganz aufgestellten Zustand können die Schwenk-Stützen und oder die Seitenwand 26 an der Kanzel mit Sicherungsstiften oder -bolzen gesichert werden.

In Fig. 2 ist beispielhaft die Lagerung und der Aufbau der Schwenk-Stütze 34 im Schwenklager 34b näher gezeigt. Die Stützen und Schwenk-Stützen des Ausführungsbeispiels sind aus einem Paar parallel angeordneter Bauelemente (34c, 34d) gebildet.

Die parallel angeordneten Bauelemente 34c und 34d der Schwenk-Stützen 33 und 34 sind zudem beidseitig der den oberen Bereich der Seitenwände 23 und 25 bildende Teil-Seitenflächen (23a, 25a) angeordnet und mit einer gemeinsamen Achse im Schwenklager 33b bzw. 34b durch die Teil-Seitenfläche 23a bwz. 25a verbunden.

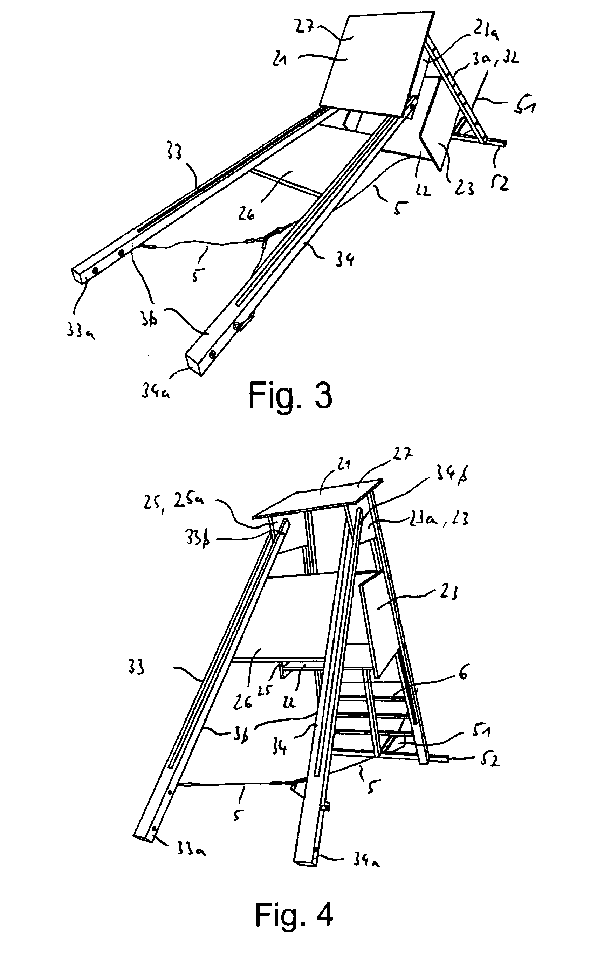

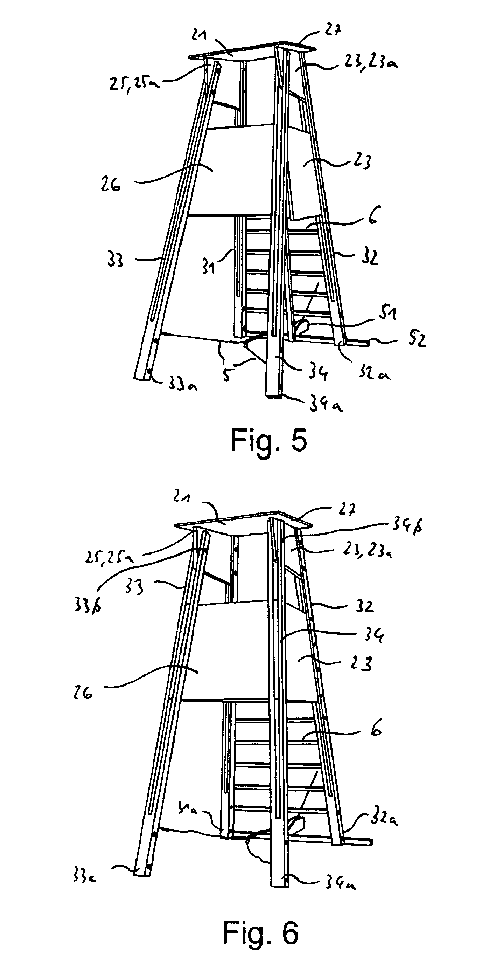

Die Fig. 3 bis 6 zeigen in unterschiedlichen Stadien wie der Kanzelhochsitz von einer liegenden Position B in eine stehende Position A gebracht werden kann.

Der Kanzelhochsitz 2 kann in die stehende Position A verbracht werden indem die Gruppe 3b der Schwenk-Stützen 33 und 34 von der anderen Gruppe 3a von Stützen 31 und 32 zunächst abgeschwenkt sind und dann die Stützen mit ihren der Kanzel abgewandten Enden 31a bis 34a den Boden berühren und dabei die Enden 31a bis 34a aufeinander zu bewegt werden bis der Kanzelhochsitz 1 in eine selbstständig durch die Stützen getragenen stehenden Position A gebracht ist.

Die starren Stützen 31 und 32 sind dabei am Boden an ein Stützlager 52 gedrückt und die Schwenk-Stützen 33 und 34 werden durch ein unter der Kanzel 2 geführtes Aufrichtseil 5 auf das Stützlager 52 hin gezogen bis die Endposition erreicht ist.

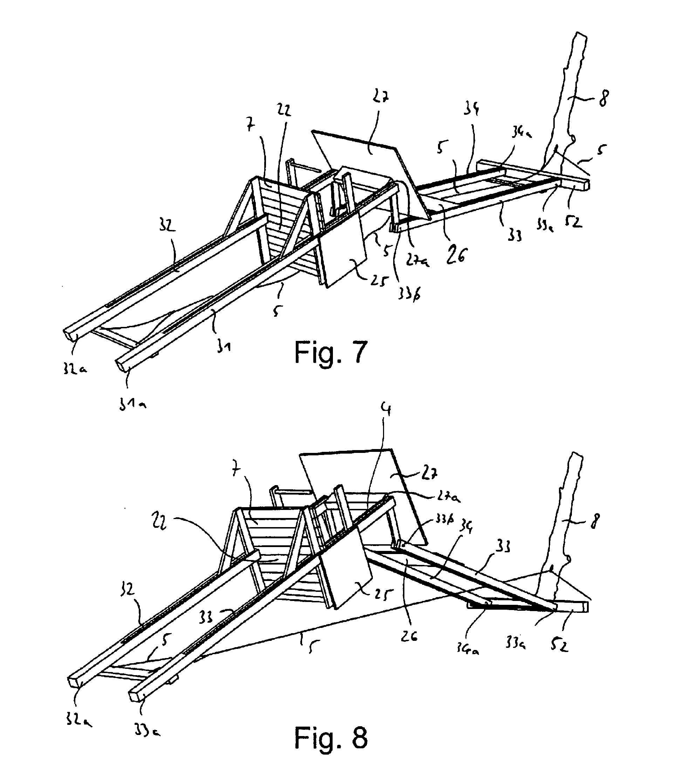

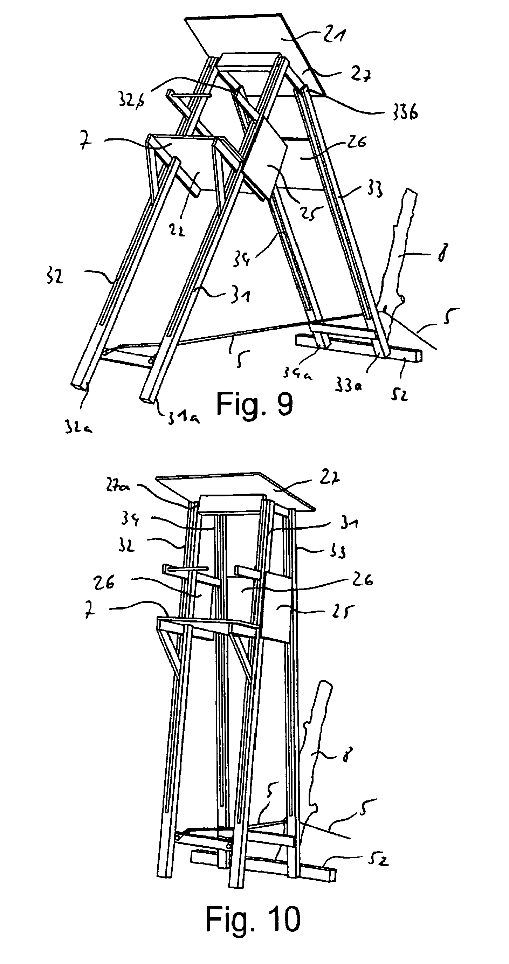

Ein Seilzugssystem kann hierbei zum Einsatz kommen (siehe Fig. 1) oder es kann auch das Aufrichtseil 5 beispielsweise wie in Fig. 7 bis 10 gezeigt um einen Baumstamm 8 geführt sein und mit einem Fahrzeug verbunden sein vermittels der Zug aufs Aufrichtseil erreicht wird.

In der Ansicht nach Fig. 7 ist auch ersichtlich, dass zur optimalen Abschwenkung der Schwenk-Stützen 33 und 34, die nahe an der Dachseite 21 gelagert sind, das Dach 27 an der der Gruppe 3b der Schwenk-Stützen gegenüberliegenden Seite 4 der Kanzel 2 aus der Ebene der Dachseite 21 heraus schwenkbar an einem Dachscharnier 27a gelagert ist.

Zudem ist im Aufrichtbeispiel nach den Fig. 7 bis 10 in der dort gezeigten Variante des Kanzelhochsitzes 1 ein Balkon 7 vorgesehen, der durch die Bodenseite 22 der Kanzel 2 gebildet ist, wobei die Bodenseite 22 die Seitenwand 24, die ein Einstieg 9 aufweist, überragt.

### Bezugszeichenliste

- 1: Kanzelhochsitz
- 2: Kanzel
- 21: Dachseite
- 22: Bodenseite
- 23 bis 26: Seitenwand
- 23a: Teil-Seitenwand
- 26a: Teil-Seitenwand
- 27: Dach
- 27a: Dachscharnier
- 31: Stütze
- 32: Stütze
- 33: Stütze, wegschwenkbar
- 34: Stütze, wegschwenkbar
- 31a bis 34a: Enden der Stützen
- 33b: Schwenklager
- 34b: Schwenklager
- 34c,d: Bauelemente
- 3a: erste Gruppe
- 3b: zweite Gruppe
- 4: Seite
- 5: Aufrichtseil
- 51: Seilzugssystem
- 52: Stützlager
- 6: Leiter
- 7: Balkon
- 8: Baumstamm
- 9: Einstieg
- A: stehende Position
- B: liegenden Position

## Patentansprüche

1. Kanzelhochsitz (1) mit einer auf mehreren Stützen (31 bis 34) getragenen Kanzel (2) mit einer Dach- (21) und einer Bodenseite (22) und mehreren die Kanzel (2) zu den Seiten hin wenigstens teilweise verschließenden Seitenwänden (23 bis 26),
wobei die die Kanzel (2) tragenden Stützen (31 bis 34) wenigstens zwei Seiten der Kanzel in mehreren Gruppen (3a, 3b) zugeordnet sind, wobei wenigstens eine erste Gruppe (3a) wenigstens eine Stütze (31, 32) die starr mit der Kanzel (2) verbunden ist umfasst und wenigstens eine zweite Gruppe (3b) wenigstens eine Schwenk-Stütze (33, 34) umfasst, die im Bereich des Dachs (21) der Kanzel (2) von der wenigstens einen anderen Gruppe (3a) von Stützen (31, 32) als Schwenk-Stützen (33, 34) wegschwenkbar gelagert ist/sind,
wobei dieser von einer wenigstens teilweise auf einem im wesentlichen ebenen Boden liegenden (B) in eine selbstständig stehende Position (A) verbracht werden kann,
wobei die Gruppe (3b) der Schwenk-Stützen (33, 34) von der anderen Gruppe (3a) von Stützen (31, 32) abgeschwenkt ist, wobei die Stützen mit ihren der Kanzel abgewandten Enden (31a bis 34a) den Boden berühren und dabei die Enden (31a bis 34a) aufeinander zu bewegt werden können bis der Kanzelhochsitz (1) in eine selbstständig durch die Stützen getragenen stehenden Position (A) verbringbar ist.

2. Kanzelhochsitz nach Anspruch 1,
**dadurch gekennzeichnet,**
**dass** mit der/den Schwenk-Stützen (33, 34) eine Seitenwand (26) verbunden ist und von der Kanzel (2) mit den Schwenk-Stützen (33, 34) zusammen wegschwenkbar ist.

3. Kanzelhochsitz nach Anspruch 1 oder 2,
**dadurch gekennzeichnet,**
**dass** an den vier den Ecken einer rechteckigen oder quaderförmigen Kanzel (2) Stützen (31 bis 34) vorgesehen sind, wobei zwei einer Seite (26) der Kanzel (2) zugeordnete Stützen die Schwenk-Stützen (33, 34) bilden.

4. Kanzelhochsitz nach einem der Ansprüche 1 bis 3,
**dadurch gekennzeichnet,**
**dass** das die Dachseite (21) bildende Dach (27) die Seitenwände (23 bis 26) und/oder die Längsachsen der Stützen (31, 32) und/oder der Schwenk-Stützen (33, 34) wenigstens teilweise überragt.

5. Kanzelhochsitz nach Anspruch 4,
**dadurch gekennzeichnet,**
**dass** das Dach (27) an der der Gruppe (3b) der Schwenk-Stützen gegenüberliegenden Seite (4) aus der Ebene der Dachseite (21) heraus schwenkbar gelagert ist.

6. Kanzelhochsitz nach einem der Ansprüche 1 bis 5,
**dadurch gekennzeichnet,**
**dass** das Schwenklager (35, 36) der Schwenk-Stütze/n (33, 34) an einer Teil-Seitenwand (23a, 25a) angeordnet ist, wobei die Teil-Seitenwand im Bereich des Daches (27) angeordnet ist.

7. Kanzelhochsitz nach einem der vorhergehenden Ansprüche,
**dadurch gekennzeichnet,**
**dass** dieser an einer Seite an den Stützen (31, 32) eine Leiter (6) aufweist.

8. Kanzelhochsitz nach einem der vorhergehenden Ansprüche,
**dadurch gekennzeichnet,**
**dass** dieser an einer Seitenwand (24) einen Einstieg (9) aufweist.

9. Kanzelhochsitz nach einem der vorhergehenden Ansprüche,
**dadurch gekennzeichnet,**
**dass** die Bodenseite (22) der Kanzel (2) wenigstens eine Seitenwand (24) insbesondere an der Seitenwand des Einstiegs (9) in Form eines Balkons (7) überragt.

10. Kanzelhochsitz nach einem der vorhergehenden Ansprüche,
**dadurch gekennzeichnet,**
**dass** die der Gruppe (3b) der Schwenk-Stützen gegenüberliegende Gruppe (3a) von Stützen (31, 32) an ihren Enden (31a, 32a) zur Lagerung am Boden in einem Stützlager (52) vorbereitet sind.

11. Kanzelhochsitz nach einem der Ansprüche 6 bis 10,
**dadurch gekennzeichnet,**
**dass** eine Stütze (31, 32) und/oder eine Schwenk-Stütze (33, 34) aus einem Paar parallel angeordneter Bauelemente (34c, 34d) gebildet ist wobei die Bauelemente (34c, 34d) der Schwenk-Stützen (33, 34) insbesondere die Teil-Seitenfläche/n (23a, 25a) von beiden Seiten teilweise umgeben und mit einer gemeinsamen Achse im Schwenklager (33b, 34b) durch die Teil-Seitenfläche/n (23a, 25a) verbunden sind.

12. Verfahren zur Aufstellung eines Kanzelhochsitzes nach einem der Ansprüche 1 bis 11,
**dadurch gekennzeichnet,**
**dass** dieser von einer wenigstens teilweise auf einem im wesentlichen ebenen Boden liegenden (B) in eine selbstständig stehende Position (A) verbracht werden wird,
wobei die Gruppe (3b) der Schwenk-Stützen (33, 34) von der anderen Gruppe (3a) von Stützen (31, 32) in eine liegende Position (B) abgeschwenkt wird, wobei die Stützen (31, 32, 33, 34) mit ihren der Kanzel abgewandten Enden (31a bis 34a) den Boden berühren und dabei die Enden (31a bis 34a) aufeinander zu bewegt werden bis der Kanzelhochsitz (1) in eine selbstständig durch die Stützen getragenen stehenden Position (A) verbracht ist.
